# EUROPÄISCHE PATENTSCHRIFT

(11) **EP 2 906 447 B1**
(45) Veröffentlichungstag und Bekanntmachung des Hinweises auf die Patenterteilung: **22.02.2017**
(21) Anmeldenummer: 13773812.6
(22) Anmeldetag: 09.10.2013
(51) Int. Cl.: B60R 11/04

(54) **VORRICHTUNG ZUR AUFNAHME EINER KAMERA MIT EINER KULISSE**
DEVICE FOR RECEIVING A CAMERA WITH A CONNECTINIG MEMBER
DISPOSITIF SERVANT A RECEVOIR UNE CAMERA AVEC UNE COULISSE

(30) Priorität: 10.10.2012 DE 102012109610
(43) Veröffentlichungstag der Anmeldung: 19.08.2015
(73) Patentinhaber: Huf Hülsbeck & Fürst GmbH & Co. KG, 42551 Velbert (DE)
(72) Erfinder: SCHÜTZ, Heiko, 42549 Velbert (DE)
(74) Vertreter: Vogel, Andreas
(86) Internationale Anmeldenummer: PCT/EP2013/071083
(87) Internationale Veröffentlichungsnummer: WO 2014/056996

(56) Entgegenhaltungen:
- WO-A1-2012/107277
- WO-A1-2012/107547
- DE-A1-102007 052 402
- DE-A1-102009 008 281
- DE-A1-102009 015 610

## Beschreibung

Die Erfindung betrifft eine Vorrichtung zur Aufnahme einer Kamera, die insbesondere als Einparkhilfe eines Kraftfahrzeuges dienen kann. Die Vorrichtung umfasst ein Gehäuse, in dem die Kamera austauschbar aufgenommen werden kann, und einem Getriebe, welches dazu dient, die Kamera zwischen einer Ruheposition und einer Betriebsposition zu bewegen.

Vorrichtungen mit einer Kamera, die zur Bilderfassung des Außenbereiches eines Kraftfahrzeuges dienen, sind aus dem Stand der Technik bereits bekannt. Derartige Vorrichtungen umfassen ein Gehäuse, in dem die Kamera zwischen einer Ruheposition und einer Betriebsposition beweglich aufgenommen ist. Beispielsweise können derartige Kameras im Bereich des assistierten Einparkens von Kraftfahrzeugen zum Einsatz kommen. Wird beispielsweise der Rückwärtsgang des Kraftfahrzeuges eingelegt, verfährt die Kamera von der Ruheposition in die Betriebsposition, wobei die Kamera wenigstens teilweise aus dem Gehäuse herausgefahren wird. Dadurch wird der Bereich hinter dem Kraftfahrzeug durch die Kamera bildlich erfasst und auf einem Display für den Fahrer des Kraftfahrzeuges angezeigt. Ist die Rückwärtsfahrt beendet und nimmt der Fahrer des Kraftfahrzeuges den Rückwärtsgang wieder heraus, kann die Kamera von der Betriebsposition wieder zurück in die Ruheposition verschwenken.

In der DE 10 2009 015 610 A1 ist eine Vorrichtung mit einer fest darin integrierten Kamera offenbart, die zur Bilderfassung des Außenbereiches eines Kraftfahrzeuges dient. Die Kamera ist dabei in einem Gehäuse zwischen einer Ruheposition und einer Betriebsposition beweglich aufgenommen, wobei das Gehäuse mit einer Führungskulisse zur Führung der Bewegung der Kamera versehen ist, in welcher ein mit der Kamera verbundenes Gleitelement geführt wird. Dabei hat sich als Nachteil herausgestellt, dass die Vorrichtung lediglich eine bestimmte Kamera aufnehmen kann, sodass die Wartung und der Austausch der Kamera erschwert ist. Die Vorrichtung sieht ferner ein Deckelelement zum Schutz der Kamera in der Ruheposition vor, wobei das Deckelelement fest an der Kamera angeordnet ist. Hierbei ist es von Nachteil, dass bei einem Unfall, wenn das Deckelelement beschädigt wird, die Kamera ebenfalls beschädigt werden kann. Außerdem ist es nachteilig, dass die Vorrichtung bautechnisch kompliziert aufgebaut ist, viele Bauteile und einen großen Bauraum erfordert. Deswegen sind die Herstellung und die Montage derartiger Vorrichtungen aufwendig und kostenintensiv. Eine gattungsgemäße Vorrichtung zur Aufnahme einer Kameraeinheit ist auch aus der DE 10 2009 008 281 A1 bekannt.

Der Erfindung liegt daher die objektive Aufgabe zugrunde, eine einfache, kostengünstige und kompakte Vorrichtung zur Aufnahme einer Kamera sowie ein Verfahren zur einfachen Montage der Vorrichtung zu schaffen, welche die oben genannten Nachteile vermeiden. Insbesondere soll die Vorrichtung verschiedene Kameras aufnehmen können, einen wirksamen Schutz der Kameraeinheit ermöglichen, wenige Bauelemente und einen kleinen Bauraum aufweisen und einfach montiert werden.

Diese Aufgabe wird erfindungsgemäß durch eine Vorrichtung mit sämtlichen Merkmalen des unabhängigen Patentanspruches 1 gelöst. Die Erfindung sieht hierzu vor, dass die Vorrichtung einen Schlitten aufweist, der verschiedene Kameras austauschbar aufnehmen kann, und dass der Schlitten mittels eines Getriebes bewegt wird, welches Getriebe einen Arm und ein Schaukelelement umfasst, die gelenkig an einem Gehäuse angeordnet sind und miteinander in mechanischer Wirkverbindung stehen. Der Erfindungsgedanke liegt dabei darin, dass der Schlitten gelenkig mit dem Schaukelelement verbunden ist und die Bewegung des Schlittens zwischen einer Ruheposition und einer Betriebsposition zumindest teilweise durch eine Gehäuseführung des Gehäuses bestimmt werden kann.

Vorteilhafterweise kann der Schlitten eine gehäuseseitige Montageöffnung aufweisen, um eine Kamera austauschbar aufzunehmen. Durch die Montageöffnung kann die Kamera auf eine einfache Weise eingeführt und wieder entnommen werden. Außerdem kann die Montageöffnung zur Aufnahme von unterschiedlichen Kameramodellen ausgebildet sein. Die Montageöffnung kann zudem derart ausgeführt werden, dass die Kamera im eingesetzten Zustand durch einen Form- und/oder Kraftschluss zuverlässig im Schlitten gehalten wird. Ferner kann der Schlitten Rast- und/oder Klemmelemente in der Montageöffnung aufweisen, die mit komplementären Halteelementen der Kamera zusammenwirken können, sodass die Kamera sicher im Schlitten angeordnet werden kann. Zudem kann der Schlitten mit einer nach außen zeigenden Aufnahmeöffnung ausgeführt sein, durch welche die Kamera nach außen gerichtet sein kann. Durch die Öffnung kann ein Objektiv der Kamera in der Betriebsposition des Schlittens den Außenbereich eines Fahrzeuges bildlich erfassen.

Gemäß der vorliegenden Erfindung können der erste Arm mittels eines ersten Gelenks am Gehäuse und das Schaukelelement mittels eines zweiten Gelenks am Gehäuse gelagert sein. Hierbei kann die erste Achse durch das erste Gelenk und die zweite Achse durch das zweite Gelenk verlaufen. Die erste und die zweite Achse, die unbeweglich bzw. starr am Gehäuse angeordnet sein können, bestimmen die Dreh- bzw. die Schwenkachsen des Armes und des Schaukelelementes und ermöglichen eine sichere und stabile Führung des Armes und des Schaukelelementes und somit des Schlittens für die Kamera. Die Bewegung des Armes und des Schaukelelementes sowie des Schlittens kann dabei links- und rechtsseitig durch die Gelenke begrenzt werden, wobei die Schwenkarme der Schaukelelemente in den Ebenen bewegt werden, die sich senkrecht zur ersten und zur zweiten Achse durch das erste und durch das zweite Gelenk verlaufen. Wenn der Arm und das Schaukelelement stabile Schwenkbewegungen ausführen, erfährt auch der Schlitten eine stabile Schwenkbewegung zwischen der Ruheposition und der Betriebsposition. Zudem kann die Bewegung des Schlittens dadurch gesichert sein, dass das erfindungsgemäße Gehäuse zwei planparallele Wandungen umfassen kann, die jeweils mit einer Gehäuseführung ausgeführt sein können, die zumindest teilweise die Bewegung des Schlittens bestimmen.

Erfindungsgemäß kann die erste Achse unbeweglich bzw. starr am Gehäuse angeordnet sein, um die der Arm verschwenkt werden kann. Die zweite Achse kann ebenfalls unbeweglich bzw. starr am Gehäuse angeordnet sein, um die das Schaukelelement verschwenkt werden kann. Konstruktionsgemäß kann die erste Achse parallel zur zweiten Achse verlaufen. Diese Anordnung der ersten und der zweiten Achse ermöglicht, dass der Schlitten stabil zwischen der Ruheposition und der Betriebsposition bewegt werden kann. Dabei kann der Schlitten parallel zur Ebene bewegt werden, in der das erste und das zweite Gelenk sowie die Führung des Gehäuses liegen.

Gemäß einem besonderen Vorteil kann das Getriebe eine dritte bewegliche Achse am Schaukelelement aufweisen, um die der Schlitten verschwenkt werden kann. Dabei kann der Schlitten mittels eines dritten Gelenks am Schaukelelement angeordnet sein, wobei insbesondere die dritte Achse durch das dritte Gelenk verlaufen kann. Erfindungsgemäß kann das Getriebe derart aufgebaut sein, dass sich die dritte Achse während der Bewegung des Schlittens parallel zur ersten Achse und zur zweiten Achse bewegen kann. Erfindungsgemäß können die dritte Achse jeweils um die zweite Achse zusammen mit dem Schaukelelement mitgeschwenkt werden. Folglich kann der Schlitten nicht nur mit dem Schaukelelement um die zweite Achse verschwenkt werden, sondern auch um die dritte Achse gekippt werden, die durch das dritte Gelenk bestimmt ist. Der Schlitten kann somit zumindest teilweise gleichzeitig eine Schwenk- und Kippbewegung ausführen. Mithin kann erreicht werden, dass der erforderliche Bauraum zur Anordnung sowie zur Führung des Schlittens und somit der Kamera minimiert wird. Dabei ist es von besonderem Vorteil, dass der Bauraum der Vorrichtung zur Aufnahme der Kamera erheblich reduziert wird.

Erfindungsgemäß kann der Schlitten ein Gleitelement aufweisen, welches entlang der Gehäuseführung des Gehäuses verschiebbar sein kann, wobei insbesondere die Gehäuseführung bogenförmig ausgeformt sein kann. Dabei kann die Führung mit einem Gleitelement eines Antriebes zusammenwirken, um die Bewegung des Schaukelelementes, insbesondere um die erste Achse zu stabilisieren. Die Führung kann als eine Öffnung in einer Gehäusewand und/oder als eine Kulisse und/oder als eine Spur innenseitig an der Gehäusewand ausgebildet sein. Vorteilhafterweise kann das Gleitelement als ein Nocken ausgebildet sein, der in der Führung verschoben wird. Nach einem besonderen Vorteil kann das Gleitelement ein Rädchen umfassen, das in der Führung rotierend bewegt werden kann, um Reibungsverluste zu minimieren und die Antriebswirkung des Getriebes zu optimieren.

Der erfindungsgemäße Arm kann mit einer Antriebsführung ausgebildet sein, die mit einem Antriebselement eines Antriebes zusammenwirkt, um den Arm um die erste Achse zu verschwenken. Hierbei kann die Antriebsführung bogenförmig ausgebildet sein. Vorteilhafterweise kann der Antrieb dazu dienen, das Getriebe in Gang zu setzen. Hierzu kann erfindungsgemäß ein Zahnradantrieb vorgesehen sein. Der Antrieb kann durch das Antriebselement auf den Arm einwirken. Der Arm, der in mechanischer Wirkverbindung mit dem Schaukelelement steht, kann die Antriebswirkung auf das Schaukelelement und dadurch auf den Schlitten übertragen, um den Schlitten in Bewegung zu setzen.

Vorteilhafterweise kann das Schaukelelement eine Lenkführung aufweisen, die mit einem Lenkelement des Armes zusammenwirken kann, um das Schaukelelement um die zweite Achse und den Schlitten um die dritte Achse zu verschwenken. Nach einem besonderen Vorteil ist es vorgesehen, dass die Lenkführung S-förmig ausgebildet sein kann. Vorteilhafterweise kann somit das Lenkelement des Armes während der Schwenkbewegung des Armes um die erste Achse entlang eines Teils der bogenförmigen Lenkführung gleiten, der beispielsweise einem Teilkreis mit dem Zentrum im ersten Gelenk und mit dem Radius, der der Länge des Armes entspricht, ähnelt. Dabei wächst der Schwenkradius mit dem das Schaukelelement sich um die zweite Achse verschwenkt. Gleitet das Lenkelement noch weiter in der Lenkführung in einem weiteren Teil der bogenförmigen Lenkführung, so kann eine Kippbewegung des Schlittens erzwungen werden, während das Schaukelelement weiter mit einem immer größer werdenden Schwenkradius um die zweite Achse verschwenkt, welcher Schwenkradius von der Position des Lenkelementes in der Lenkführung bestimmt sein kann. Vorteilhafterweise, kann dadurch erreicht werden, dass der Schlitten nicht nur mit dem Schaukelelement um die zweite Achse verschwenkt sondern auch noch weiter in die Richtung zur Betriebsposition um die dritte bewegliche Achse gekippt werden kann.

Der Erfindungsgedanke liegt dabei darin, dass das Getriebe derart ausgebildet sein kann, dass der Schlitten zum Teil eine Schwenkbewegung um die zweite Achse und zum Teil eine Kippbewegung um die dritte Achse ausführen kann. Hierbei kann die Schwenkbewegung aus der Ruheposition in die Betriebsposition mit einem veränderlichen Radius durchgeführt werden, der durch die Lenkführung bestimmt sein kann. Mithin wird vorteilhafterweise sichergestellt, dass der Bauraum, der sowohl für die Lagerung als auch für die Führung des Schlittens erforderlich ist, erheblich reduziert sein kann. Durch Abrollen des Gleitelementes in der Gehäuseführung kann außerdem gewährleistet sein, dass der Schlitten durch das Getriebe sicher und stabil zwischen der Ruheposition und der Betriebsposition bewegt werden kann.

Vorteilhafterweise kann in einer ersten Antriebsphase das Antriebselement von einem gehäuseseitigen Anschlag bis zu einem getriebeseitigen Anschlag der Antriebsführung verfahren werden, ohne dass das Getriebe in Gang gesetzt wird. Anschließend in der zweiten Antriebsphase kann das Antriebselement auf den getriebeseitigen Anschlag derart einwirken, dass das Lenkelement von einem unteren Anschlag der Lenkführung bis zu einem oberen Scheitelpunkt verfahren werden kann. Dabei kann das Gleitelement des Schlittens entlang der Gehäuseführung von einem hinteren Anschlag bis zur Mitte der Gehäuseführung bewegt werden. Ferner kann in einer dritten Antriebsphase das Lenkelement derart mit der Lenkführung zusammenwirken, dass das Lenkelement von dem oberen Scheitelpunkt der Lenkführung bis zu einem unteren Scheitelpunkt verfahren werden kann. Gleichzeitig kann sich das Antriebselement in der Antriebsführung von dem getriebeseitigen Anschlag zurück in die Richtung zum gehäuseseitigen Anschlag bewegen. Hierbei kann das Gleitelement entlang der Führung von der Mitte der Führung bis zu einem vorderen Anschlag bewegt werden. Abschließend kann das Lenkelement in der vierten Antriebsphase derart mit der Lenkführung zusammenwirken, dass das Lenkelement von dem unteren Scheitelpunkt der Lenkführung bis zum oberen Anschlag verfahren kann, dass das Antriebselement weiter zurück in die Richtung zum gehäuseseitigen Anschlag bis zu einem Mittelpunkt der Antriebsführung verfahren kann. Dabei kann das Gleitelement am vorderen Anschlag der Gehäuseführung ruhen, während der Schlitten um die dritte Achse weiter in die Richtung der Betriebsposition verschwenkt bzw. gekippt werden kann. Es kann vorteilhafterweise vorgesehen sein, dass das Getriebe, insbesondere das Lenkelement in der Betriebsposition des Schlittens in der Lenkführung einrasten kann. Mithin kann der Schlitten sicher in der Betriebsposition gehalten werden, wobei, um den Schlitten wieder in Bewegung zu setzen, eine Antriebskraft benötigt wird, um den Antriebsablauf in umgekehrte Richtung zu durchlaufen und den Schlitten wieder in die Ruheposition zu bringen.

Es kann vorgesehen sein, dass das Getriebe derart aufgebaut sein kann, dass während der Kippbewegung die Schwenkbewegung des Schlittens um die zweite Achse blockiert ist. Dabei kann der Schlitten in einer ersten Bewegungsphase um die zweite Achse verschwenkt und anschließend in der zweiten Bewegungsphase in die Richtung der Betriebsposition gekippt werden. Alternativ ist es denkbar, dass das Getriebe derart aufgebaut sein kann, dass die Kippbewegung und die Schwenkbewegung zumindest teilweise gleichzeitig erfolgen können. Dabei kann der Schlitten eine bogenförmige Schwenkbewegung ausführen und gleichzeitig etwas nach vorne in die Betriebsposition kippen, was den Bewegungsraum des Schlittens und somit den Bauraum der Vorrichtung minimiert.

Vorteilhafterweise kann das Gehäuse eine Öffnung aufweisen, durch die der Schlitten in der Betriebsposition hinausragen kann. Weiterhin kann ein Deckelelement vorgesehen sein, das in der Ruheposition des Schlittens die Öffnung abschließen kann. Das Deckelelement kann unter einem Herstellerzeichen am Heck des Fahrzeugs angeordnet werden oder das Herstellerzeichen selbst sein. Das Deckelelement kann dabei die Kamera in der Ruheposition abdecken und schützen. Weiterhin kann das Deckelelement eine abdichtende Funktion erfüllen.

Erfindungsgemäß kann eine Schutzmembran vorgesehen sein, die den freien Raum zwischen der Öffnung im Gehäuse und dem Schlitten abdichtend abschließen kann, um das Eindringen von Schmutzpartikeln und Feuchtigkeit in das Gehäuse zu verhindern und die Kamera vor Witterungseinflüssen zu schützen. Die Schutzmembran kann in Form einer Balgenmembran, insbesondere schlauchförmig, ausgeformt werden. Dabei kann ein Ende der balgenförmigen Schutzmembran an einem Rand der Öffnung außenseitig am Gehäuse angebracht werden. Dieses Ende der Schutzmembran kann dabei durch einen Form- und/oder Kraftschluss zwischen dem Rand der Öffnung und einem Gehäusedeckel befestigt bzw. festgeklemmt werden und/oder auf den Rand der Öffnung geklebt werden. Das zweite Ende der balgenförmigen Schutzmembran kann an einer Öffnung, insbesondere der Aufnahmeöffnung des Schlittens außenseitig befestigt werden. Dieses Ende der Schutzmembran kann durch einen Spannring am Rand der Öffnung gehalten werden und/oder am Rand der Öffnung geklebt werden. Die Schutzmembran kann dabei aus einem elastischen Material ausgeführt sein. Während der Bewegung des Schlittens kann die Schutzmembran verformt werden. Vorteilhafterweise schließt die Membran die Öffnung im Gehäuse abdichtend ab, sodass kein Schmutz oder Feuchtigkeit ins Gehäuse eindringen und die Kamera beschädigen kann.

Zudem kann vorgesehen sein, dass die Öffnung mit einem Kragenelement ausgeführt werden kann, an welchem das Deckelelement geräuschlos anliegen und gegebenenfalls abfedern kann, wenn der Schlitten sich in der Ruheposition befindet, wobei insbesondere das Kragenelement aus einem elastischen Material ausgebildet sein kann.

Das Gehäuse der Vorrichtung und/oder das Getriebe und/oder der Schlitten und/oder die Schaukelelemente können aus einem beliebigen Kunststoff, Metall und dergleichen ausgebildet sein, das insbesondere einen höheren Härtegrad aufweist als das Material der Schutzmembran und/oder des Kragenelementes.

Vorteilhafterweise kann vorgesehen sein, dass das Deckelelement keines besonderen Antriebes bedarf. Erfindungsgemäß kann das Deckelelement durch die Kamera während der Bewegung aus der Ruheposition in die Bewegungsposition in eine Öffnungsposition bzgl. der Kamera aufgestoßen werden. Zurück in eine Schließposition kann der Deckel unter Wirkung der eigenen Schwerkraft fallen und/oder durch ein Verbindungselement am Schlitten zugezogen werden. Der Schlitten kann dabei mit Deckelelement derart in mechanischer Wirkverbindung stehen, dass während der Bewegung zwischen der Ruheposition in die Betriebsposition der Schlitten das Deckelelement zwischen der Öffnungsposition und der Schließposition mitbewegt. Hierzu kann vorgesehen sein, dass der Schlitten mindestens einen Stößel aufweisen kann und/oder der Schlitten mit dem Deckelelement form- und/oder kraftschlüssig verbunden sein kann.

Vorteilhafterweise kann das Deckelelement mittels eines Drehgelenks und/oder formschlüssig und/oder kraftschlüssig drehbar und/oder lösbar am Gehäuse angeordnet sein. Hiermit wird sichergestellt, dass das Deckelelement ohne angetrieben zu werden durch die Kamera oder den Schlitten aufgestoßen werden kann und/oder zurückgezogen werden kann. Es bedarf lediglich einer drehbaren Verbindung des Deckelelementes mit dem Gehäuse. Weiterhin kann der Deckel abnehmbar bzw. lösbar ausgeführt sein. Dadurch wird ein besonderer Vorteil erreicht, dass im Falle eines Zusammenstoßes mit einem anderen Fahrzeug oder Gegenstand das Deckelelement zwar beschädigt und sogar abfallen kann, jedoch die Kamera nicht durch Einwirkung auf das Deckelelement in Mitleidenschaft gezogen werden kann. Sollte das Deckelelement in einer geöffneten Position verharren, so wird es keine Gefahr für das Innere der Vorrichtung darstellen und bei einer mechanischen Einwirkung auf das Deckelelement lediglich abfallen.

Weiterhin wird die erfindungsgemäße Aufgabe durch ein Verfahren mit sämtlichen Merkmalen des Verfahrensanspruches zur Montage einer Vorrichtung gelöst, die zur Aufnahme einer Kamera dienen kann, die beispielsweise als Einparkhilfe eines Kraftfahrzeuges benutzt werden kann. Die Vorrichtung kann ein Gehäuse aufweisen, in welchem ein Schlitten bewegbar aufgenommen sein kann, an dem die Kamera befestigt werden kann. Dabei kann das Gehäuse zumindest ein erstes und ein zweites Gehäuseteil umfassen. Zum Führen des Schlittens zwischen einer Ruheposition und einer Betriebsposition ist ein Getriebe vorgesehen, das einen Arm aufweist, der drehbar um eine erste Achse am Gehäuse gelagert sein kann, und mit einem Schaukelelement in mechanischer Wirkverbindung stehen kann, das drehbar um eine zweite Achse am Gehäuse gelagert sein kann. Ferner kann der Schlitten drehbar um eine dritte Achse am Schaukelelement gelagert sein, wobei die Bewegung des Schlittens zwischen einer Ruheposition und einer Betriebsposition zumindest teilweise durch eine Gehäuseführung des Gehäuses bestimmt sein kann. Die Montage der erfindungsgemäßen Vorrichtung kann folgende Schritte in einer beliebigen Reihenfolge aufweisen:

In einem ersten Schritt können das Getriebe und der Schlitten in einer ersten Montagerichtung zu einer Innenseite des ersten Gehäuseteils geführt werden und an der Innenseite des ersten Gehäuseteils befestigt werden. In einem zweiten Schritt kann das zweite Gehäuseteil in der ersten Montagerichtung zum ersten Gehäuseteil geführt werden und mit dem ersten Gehäuseteil derart befestigt werden, dass eine Schwenk- und/oder eine Kippbewegung des Schlittens zwischen der Ruheposition und der Betriebsposition ausgeführt werden kann. Die Montage der Vorrichtung kann somit vereinfacht werden, indem alle Komponenten des Getriebes sowie der Schlitten zur Aufnahme der Kamera an einem Gehäuseteil, insbesondere einer Wand des Gehäuses, angebracht werden können. Erst danach kann das zweite Gehäuseteil derart an dem ersten Gehäuseteil befestigt werden, dass das erfindungsgemäße Getriebe und der Schlitten geschützt durch das Gehäuse umschlossen werden. Erfindungsgemäß kann vorgesehen sein, dass der erste und der zweite Schritt sequentiell ausgeführt werden können. Alternativ kann vorgesehen sein, dass der erste und der zweite Schritt zumindest teilweise gleichzeitig erfolgen können.

In einem weiteren dritten Schritt kann ein Gehäusedeckel am ersten und/oder am zweiten Gehäuseteil befestigt werden, der nach außen aus dem Fahrzeuginneren ausgerichtet sein kann, um das Getriebe, insbesondere den Antrieb, und die im Schlitten angeordnete Kamera von mechanischen Einwirkungen von außen zu schützen.

In einem der erfindungsgemäßen Schritte kann eine Schutzmembran am Schlitten angeordnet werden, wobei die Schutzmembran zwischen dem Gehäusedeckel und zumindest einem der beiden Gehäuseteilen befestigt werden kann. Die Schutzmembran kann in Form einer Balgenmembran, insbesondere schlauchförmig, ausgebildet sein. Dabei kann ein Ende der balgenförmigen Schutzmembran an einem Rand der Öffnung außenseitig am Gehäuse oder am Gehäusedeckel angebracht werden. Dieses Ende der Schutzmembran kann dabei durch einen Form- und/oder Kraftschluss zwischen dem Gehäusedeckel und mit einem oder mit beiden Gehäuseteilen befestigt bzw. festgeklemmt werden und/oder auf den Rand einer Öffnung im Gehäusedeckel geklebt werden.

Erfindungsgemäß können die Merkmale der Beschreibung der erfindungsgemäßen Vorrichtung und des erfindungsgemäßen Verfahrens sowohl einzeln für sich als auch in den verschiedensten Kombinationen erfindungswesentlich sein. Weitere, die Erfindung verbessernde Maßnahmen werden nachstehend gemeinsam mit der Beschreibung der bevorzugten Ausführungsbeispiele der Erfindung anhand der Figuren näher dargestellt. Es zeigen:
- Fig. 1: eine erfindungsgemäße Vorrichtung in einer perspektivischen Ansicht,
- Fig. 2a: eine seitliche Ansicht der erfindungsgemäßen Vorrichtung in einer Ruheposition eines Schlittens,
- Fig. 2b: eine seitliche Ansicht der erfindungsgemäßen Vorrichtung in einer Position zwischen der Ruheposition und einer Betriebsposition des Schlittens,
- Fig. 2c: eine seitliche Ansicht der erfindungsgemäßen Vorrichtung in der Betriebsposition des Schlittens,
- Fig. 3a: eine perspektivische Ansicht der erfindungsgemäßen Vorrichtung in der Ruheposition des Schlittens,
- Fig. 3b: eine perspektivische Ansicht der erfindungsgemäßen Vorrichtung in der Betriebsposition des Schlittens,
- Fig. 4a: eine perspektivische Ansicht der erfindungsgemäßen Vorrichtung in der Ruheposition des Schlittens aus einem anderen Blickwinkel als in Figuren 3a und 3b,
- Fig. 4b: eine perspektivische Ansicht der erfindungsgemäßen Vorrichtung in der Betriebsposition des Schlittens aus dem Blickwinkel der Figur 4a,
- Fig. 5: eine schematische Darstellung eines erfindungsgemäßen Armes und eines erfindungsgemäßen Schaukelelementes, und
- Fig. 6: eine schematische Darstellung eines erfindungsgemäßen Gehäuses.

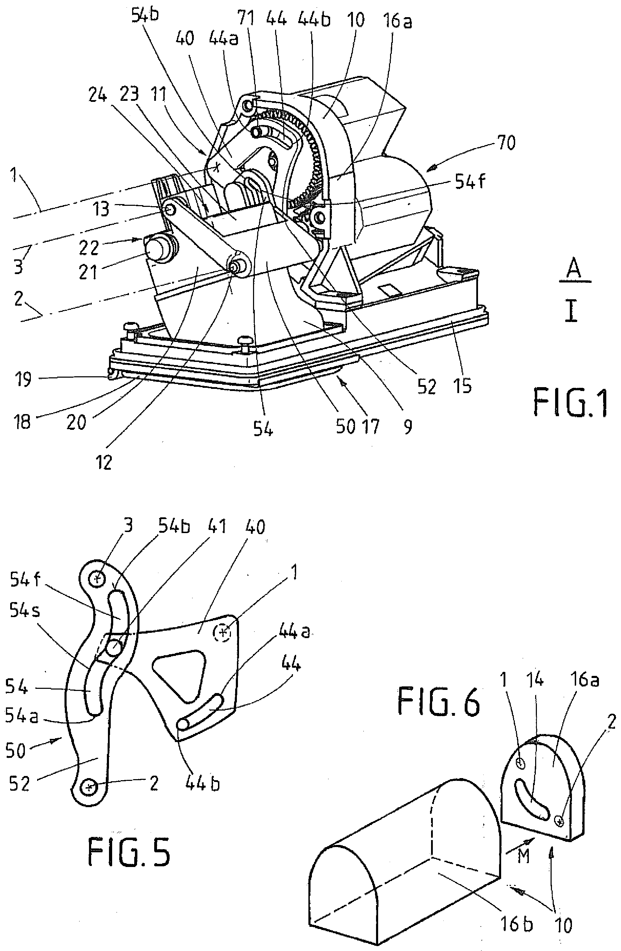

Figur 1 zeigt eine erfindungsgemäße Vorrichtung, die einen Schlitten 20, der eine Kamera 60 austauschbar aufnehmen kann, und ein Getriebe 30 aufweist, welches den Schlitten 20 zwischen einer Ruheposition A und einer Betriebsposition B bewegen kann. Das Getriebe 30 weist einen Arm 40 und ein Schaukelelement 50 auf, wobei das Schaukelelement 50 gelenkig mit dem Schlitten 20 verbunden ist. Der Arm 40 und das Schaukelelement 50 sind drehbar mittels eines ersten 11 und eines zweiten Gelenks 12 an einem Gehäuse 10 gelagert. Die Gelenke 11, 12 können dabei in Form von Stiften bzw. Schrauben ausgebildet sein. Der Schlitten 20 ist schwenkbar mittels eines dritten Gelenks 13 am Schaukelelement 50 angeordnet. Durch die drei Gelenke 11, 12, 13 kann der Schlitten 20 zwischen der Ruheposition A und der Betriebsposition B zum Teil verschwenkt und zum Teil gekippt werden. Der Schlitten 20 weist dabei eine Montageöffnung 24 auf, durch welche verschiedene Kameras 60 im Schlitten 20 aufgenommen werden können. Zu einer sicheren Aufnahme der Kamera 60 kann der Schlitten 20 derart ausgebildet sein, dass die Kamera 60 form- und/oder kraftschlüssig und/oder mithilfe von Rast- und/oder Klemmelementen gehalten wird.

Die Figur 1 zeigt den Schlitten 20 in einer eingefahrenen Ruheposition A, in der die Kamera 60 innerhalb des Gehäuses 10 geschützt durch ein Deckelelement 18 angeordnet ist, welches eine Öffnung 17 in einem Gehäusedeckel 15 abschließt. In der Betriebsposition B des Schlittens 20 kann die Kamera 60 in einem ausgefahrenen Zustand durch die Öffnung 17 nach Außen herausragen. Das Deckelelement 18 ist mittels eines Drehgelenks 19 lösbar am Gehäusedeckel 15 gelagert und kann mit dem Schlitten 20 zwischen einer Öffnungsposition und einer Schließposition mitgeschwenkt werden, wenn sich der Schlitten 20 zwischen einer Ruheposition A und einer in Figur 1 nicht dargestellten Betriebsposition B verschwenkt.

Das Gehäuse 10 umfasst ein erstes Gehäuseteil 16a und ein in Figur 1 nicht dargestelltes zweites Gehäuseteil 16b, welche miteinander und mit dem Gehäusedeckel 15 verschraubt werden können. Erfindungsgemäß kann eine Schutzmembran 9 vorgesehen sein, um das Innere des Gehäuses 10 abzudichten. Die Schutzmembran 9 kann balgen- und/oder schlauchförmig ausgebildet sein. Dabei kann ein Ende der Schutzmembran 9 außenseitig am Gehäuse 10 befestigt werden. Die Schutzmembran 9 kann zwischen dem Gehäusedeckel 15 und dem ersten 16a und/oder dem zweiten Gehäuseteil 16b, eingeklemmt und/oder verschraubt und/oder eingeklebt werden. Die Schutzmembran 9 dichtet dabei den Raum zwischen der Öffnung 17 und dem Schlitten 20 derart ab, dass keine Feuchtigkeit oder Schmutzpartikel in das Innere des Gehäuses 10 eindringen können. Das andere Ende der Schutzmembran 9 kann um den Schlitten 20 an dem Rand einer nicht dargestellten Aufnahmeöffnung 25 für die Kamera 60 verspannt werden.

Das Getriebe 30 weist eine erste unbeweglich am Gehäuse 10 angeordnete Achse 1 auf, um die der Arm 40 verschwenkt werden kann, und eine zweite unbeweglich am Gehäuse 10 angeordnete Achse 2, um die das Schaukelelement 50 verschwenkt werden kann. Die erste Achse 1 verläuft dabei parallel zur zweiten Achse 2, wobei der Schlitten 20 zu einem Teil eine Schwenkbewegung S zusammen mit dem Schaukelelement 50 um die Achse 2 ausführen kann. Die erste Achse 1 verläuft erfindungsgemäß durch das erste Gelenk 11 und die zweite Achse 2 durch das zweite Gelenk 12. Der Schlitten 20 ist wie oben beschrieben mithilfe des dritten Gelenks 13 am Schaukelelement 50 angeordnet, wobei an beiden Seiten des Schlittens 20 jeweils ein drittes Drehgelenk 13 angeordnet ist. Die Erstreckungsrichtung zwischen den beiden Drehgelenken 13 bestimmt eine dritte Achse 3 am Schaukelelement 50, die mit dem Schaukelelement 50 mitbewegt bzw. um die zweite Achse 2 mitgeschwenkt wird. Dabei erstreckt sich die dritte Achse 3 stets parallel zur ersten 1 und zur zweiten Achse 2. Somit kann der Schlitten 20 ebenfalls um die zweite Achse 2 zusammen mit dem Schaukelelement 50 verschwenkt werden. Gleichzeitig während der Schwenkbewegung S des Schlittens 20 um die zweite Achse 2 oder sequentiell zur Schwenkbewegung S kann der Schlitten 20 sich um die dritte Achse 3 kippen. Zumindest teilweise kann die Schwenkbewegung S und die Kippbewegung K des Schlittens 20 durch eine nicht dargestellte Gehäuseführung 14 im Gehäuse 10 bestimmt werden, in dem ein Gleitelement 21 des Schlittens 20 geführt werden kann. Zudem kann die Gehäuseführung 14 des Gehäuses 10 zur Stabilisierung der Bewegung des Schlittens 20 zwischen der Ruheposition A und der Betriebsposition B dienen. Die Bewegung des Schlittens 20, die aus der Schwenkbewegung S um die zweite Achse 2 und der Kippbewegung K um die dritte Achse 3 zusammengesetzt ist, ermöglicht den erforderlichen Bauraum zur Lagerung sowie zur Führung des Schlittens 20 innerhalb des Gehäuses 10 zu minimieren.

Der Arm 40 weist erfindungsgemäß eine Antriebsführung 44 auf, die mit einem Antriebselement 71 eines Antriebes 70 zusammenwirken kann, um den Arm 40 in Bewegung zu setzen. Der Antrieb 70 setzt somit das ganze Getriebe 30 in Gang, wobei die Wirkung auf den Arm 40 über eine Lenkführung 54 am Schaukelarm 52 des Schaukelelementes 50 auf das Schaukelelement 50 und über das dritte Gelenk 13 auch auf den Schlitten 20 übertragen wird. Der Anrieb 70 ist beispielsweise als ein Zahnradantrieb dargestellt. Die Antriebsführung 44 ist gemäß der gezeigten Ausführungsalternative als eine Nut in einem Glied des Armes 40 ausgebildet. Alternativ ist es denkbar, dass die Antriebsführung 44 als eine Kulisse und/oder als eine Spur innenseitig an dem Glied des Armes 40 ausgebildet sein kann. Die Antriebsführung 44 ist erfindungsgemäß bogenförmig ausgeführt. Die Lenkführung 54 des Schaukelelementes 50 kann ebenfalls als eine Kulisse, eine Nut oder eine Spur am Schaukelarm 52 ausgebildet sein. Gemäß der vorliegenden Erfindung ist die Lenkführung 54 S-förmig ausgeführt, um einerseits zu bewirken, dass das Schaukelelement 50 um die zweite Achse 2 verschwenkt werden kann, und andererseits eine Kippbewegung K des Schlittens 20 um die dritte Achse 3 zu ermöglichen.

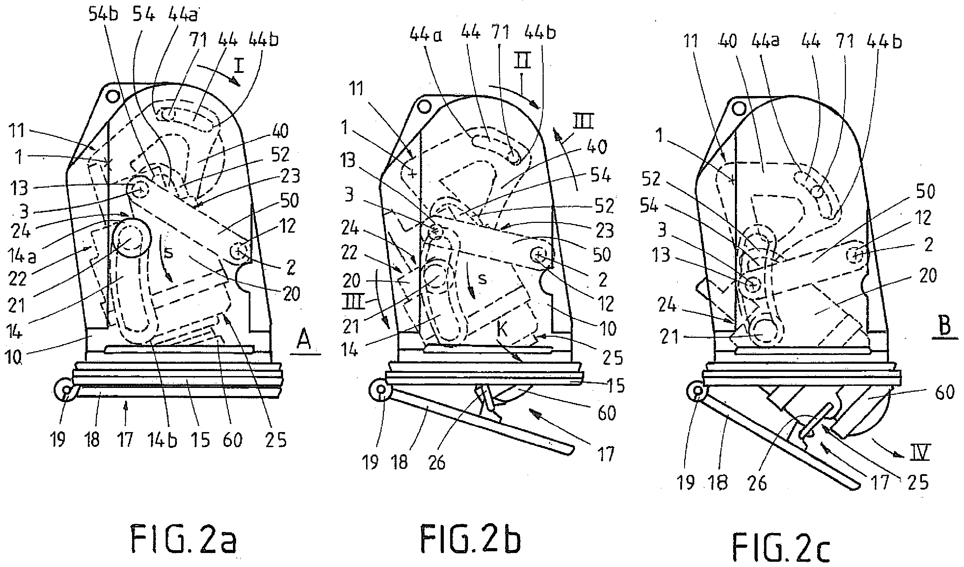

In einer ersten Antriebsphase I, die ausführlicher in der Beschreibung der Figuren 2a bis 2c beschrieben wird, kann das Antriebselement 71, angetrieben durch den Antrieb 70, aus einem gehäuseseitigen Anschlag 44a bis zu einem getriebeseitigen Anschlag 44b verfahren, ohne das Getriebe 30 in Gang zu setzten. Anschließend in einer zweiten Antriebsphase II drückt das Antriebselement 71 auf den getriebeseitigen Anschlag 44b und verschwenkt den Arm 40 um die erste Achse 1. Ein Lenkelement 41 des Armes 40, welches in der Lenkführung 54 des Schaukelelementes 50 geführt wird, verfährt dabei in der Lenkführung 54 von einem unteren Anschlag 54a bis zu einem oberen Scheitelpunkt 54s der Lenkführung 54 und wirkt dabei derart mit der Lenkführung 54 zusammen, dass das Schaukelelement 50 um die zweite Achse 2 verschwenkt wird. In der dritten Antriebsphase III hat das Antriebselement 71 den getriebeseitigen Anschlag 44b der Antriebsführung 44 erreicht. Anschließend wirkt das Antriebselement 71 derart mit der Antriebsführung 44 zusammen, dass das Lenkelement 41 weiterhin aus dem oberen Scheitelpunkt 54s in einen unteren Scheitelpunkt 54f der Lenkführung 54 verfährt. Dies bewirkt, dass das Schaukelelement 50 sich dabei noch weiter um die zweite Achse 2 verschwenkt. Gleichzeitig verfährt das Antriebselement 71 zurück aus dem getriebeseitigen Anschlag 44b in die Richtung zur Mitte der Antriebsführung 44. Anschließend in einer vierten Antriebsphase IV erreicht das Antriebselement 71 die Mitte der Antriebsführung 44, das Lenkelement 41 einen oberen Anschlag 54b der Lenkführung 54, wobei das Schaukelelement 50 sich noch weiter um die zweite Achse 2 verschwenkt. Dabei verschwenkt sich das Schaukelelement 50 um die zweite Achse 2 mit einem immer größer werdenden Schwenkradius, abhängig von der Position des Lenkelementes 41 in der Lenkführung 54. Während dieser vier Antriebsphasen II, III und/oder IV, die näher in den Figuren 2a, 2b und 2c gezeigt sind, verschwenkt sich der Schlitten 20 zusammen mit dem Schaukelelement 50 um die zweite Achse 2 und führt eine weitere Schwenkbewegung S bzw. eine Kippbewegung K um die dritte Achse 3 mit einem Schwenkradius, der dem Abstand zwischen dem Gelenk 13 und dem Gleitelement 21 entspricht. Dabei kann die Schwenkbewegung S und die Kippbewegung K des Schlittens 20 durch die Gehäuseführung 14 im Gehäuse 10 mitbestimmt werden, mit der das Gleitelement 21 des Schlittens 20 zusammenwirken kann.

Figuren 2a, 2b und 2c zeigen in einer Seitenansicht, wie das erfindungsgemäße Getriebe 30 den Schlitten 20 zwischen einer Ruheposition A der Figur 2a und einer Betriebsposition B der Figur 2c antreibt. Während einer ersten Antriebsphase I gleitet das Antriebselement 71 in der Antriebsführung 44 von einem gehäuseseitigen Anschlag 44a der Antriebsführung 44 bis zu einem getriebeseitigen Anschlag 44b ohne das Getriebe 30 in den Gang zu setzen. Während einer zweiten Antriebsphase II wirkt das Antriebselement 71 derart auf den getriebeseitigen Anschlag 44b ein, dass ein Lenkelement 41 des Armes 40 von einem unteren Anschlag 54a der Lenkführung 54 am Schaukelelement 50 bis zu einem oberen Scheitelpunkt 54s verfährt, und dass das Gleitelement 21 des Schlittens 20 entlang der Gehäuseführung 14 von einem hinteren Anschlag 14a bis ungefähr zur Mitte der Gehäuseführung 14 verfährt. Während einer dritten Antriebsphase III wirkt das Lenkelement 41 derart mit der Lenkführung 54 zusammen, dass das Lenkelement 41 von dem unteren Scheitelpunkt 54f bis zu einem oberen Scheitelpunkt 54s der Lenkführung 54 verfährt. Dabei verfährt das Antriebselement 71 von dem getriebeseitigen Anschlag 44b ein kleines Stück zurück in die Richtung zum gehäuseseitigen Anschlag 44a in der Antriebsführung 44. Währenddessen verfährt das Gleitelement 21 entlang der Gehäuseführung 14 von ungefähr der Mitte der Gehäuseführung 14 bis zu einem vorderen Anschlag 14b. Abschließend in der vierten Antriebsphase IV wirkt das Lenkelement 41 derart mit der Lenkführung 54 zusammen, dass das Lenkelement 41 von dem oberen Scheitelpunkt 54s bis zum oberen Anschlag 54b der Lenkführung 54 verfährt. Dabei verfährt das Antriebselement 71 weiter zurück in die Richtung zum gehäuseseitigen Anschlag 44a bis annähernd zum Mittelpunkt der Antriebsführung 44, wobei das Gleitelement 21 am vorderen Anschlag 14b der Gehäuseführung 14 ruht. Auf die Anordnung des Armes 40 mit der Antriebsführung 44 und des Schaukelelementes 50 mit der Lenkführung 54 wird ausführlicher nachfolgend in der Beschreibung der Figur 5 eingegangen.

Während der Antriebsphasen II bis IV wirkt die Hebelwirkung, ausgeübt durch das Lenkelement 41, auch auf den Schlitten 20 ein. Das Lenkelement 41, das auf die Lenkführung 54 am Schaukelarm 52 des Schaukelelementes 50 einwirkt, erzeugt dabei ein Drehmoment am Schaukelelement 50, welches weiterhin auch auf den Schlitten 20 übertragen wird. Der Schlitten 20 erfährt somit ein Drehmoment mit einem Hebelarm, der eine Länge aufweist, die dem Abstand zwischen dem Gelenk 13 und dem Gleitelement 21 gleicht. Während der Antriebsphasen II bis IV verschwenkt sich der Schlitten 20 also zusammen mit dem Schaukelelement 50 mit einem veränderlichen Schwenkradius, der durch den Abstand zwischen dem zweiten Gelenk 12 und der Position des Lenkelementes 41 des Amres 40 in der Lenkführung 54 des Schaukelelementes 50 entspricht. Der veränderliche Schwenkradius kann außerdem zumindest zum Teil durch die Ausrichtung und die Form der Gehäuseführung 14 mitbestimmt werden. Die Gehäuseführung 14 kann zudem zur Stabilisierung der Schwenkbewegung S des Schlittens 20 führen. Gleichzeitig zur Schwenkbewegung S führt der Schlitten 20 eine Kippbewegung K um die dritte Achse 3 mit einem Schwenkhebel aus, welcher durch die Position des Gleitelementes 21 in der Gehäuseführung 14 und die Position des dritten Gelenks 13 bestimmt ist. Das Gleitelement 21 kann als ein Nocken und/oder ein Rädchen ausgebildet sein, welcher bzw. welches in der Gehäuseführung 14 gleiten und/oder abrollen kann. Das Gleitelement 21 kann an einer oberen Hinterseite 22 des Schlittens 20 und das dritte Gelenk 3 an einer unteren Hinterseite 23 des Schlittens 20 angeordnet werden.

Die erfindungsgemäße Vorrichtung weist dabei ein Gehäuse 10 auf, welches das Getriebe 30 aufnimmt und eine Öffnung 17 im Gehäusedeckel 15 aufweist, durch die der Schlitten 20 in der Betriebsposition B der Figur 2c hinausragen kann. Die Öffnung 17 im Gehäuse 10 wird mit einem Deckelelement 18 in der Ruheposition A der Figur 2a verschlossen. Das Deckelelement 18 kann dabei die Kamera 60 in der Ruheposition A abdecken und schützen. Das Deckelelement 18 ist mittels eines Drehgelenks 19 drehbar und lösbar am Gehäuse 10 angeordnet, wobei das Deckelelement 18 ohne einen Antrieb durch den Schlitten 20 aufgestoßen werden kann und/oder zurückgezogen werden kann. Das Deckelelement 18 steht dabei über ein lösbares Verbindungselement 26 mit dem Schlitten 20 in Wirkverbindung.

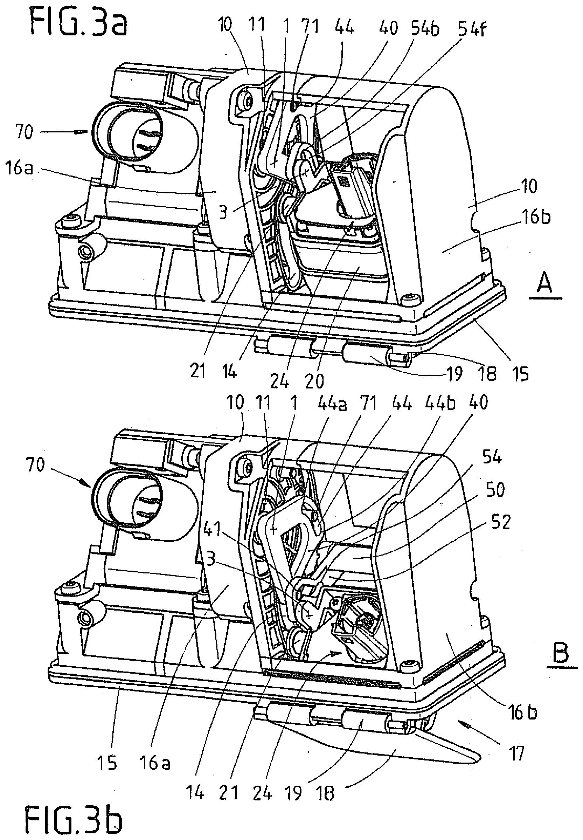

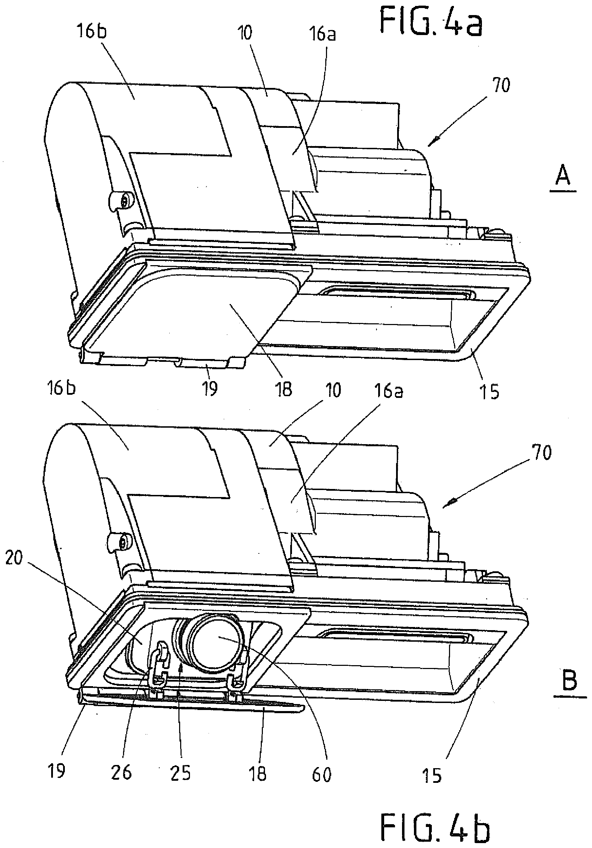

Die Figuren 3a, 3b und 4a, 4b zeigen die erfindungsgemäße Vorrichtung in einer perspektivischen Ansicht von oben und von unten, wobei die Figuren 3a und 4a die Vorrichtung in einer Ruheposition A des Schlittens 20 und die Figuren 3b und 4b die Vorrichtung in einer Betriebsposition B zeigen. Die Vorrichtung umfasst ein Gehäuse 10, welches einen Gehäusedeckel 15 aufweist, der aus dem Fahrzeug nach außen zeigt. Im Gehäusedeckel 15 ist eine Öffnung 17 vorgesehen, durch die ein bewegbarer Schlitten 20 aus der Ruheposition A in die Betriebsposition B verfahren kann, wobei in der Betriebsposition B eine Kamera 60, die im Schlitten 20 austauschbar aufgenommen ist, aus der Öffnung 17 herausragen und den Außenbereich des Fahrzeugs bildlich erfassen kann. Der Schlitten 20 weist an dieser Seite eine Aufnahmeöffnung 25 auf, durch die das Objektiv der Kamera 60 herausschauen kann. Am Gehäusedeckel 15 ist ein Deckelelement 18 angeordnet, welches die Öffnung 17 in der Ruheposition A des Schlittens 20 abdeckt. Hierbei ist das Deckelelement 18 mittels eines Drehgelenks 19 lösbar am Gehäuse 10 gelagert. An der Innenseite des Gehäuses 10, die in den Figuren 3a und 3b zu sehen ist, ist das Gehäuse 10 mit einer weiteren Öffnung ausgeführt, durch die die Kamera 60 bei Montage in eine Montageöffnung 25 des Schlittens 20 eingeführt werden kann. Dabei kann die Kamera 60 durch einen Form- und/oder Kraftschluss oder mittels Rastelemente verrutschfest im Schlitten 20 gehalten werden. Das Gehäuse 10 kann ein Getriebe 30 und einen Antrieb 70 umschließen, wobei das Getriebe 30 zum Antreiben des Schlittens 20 dient. Der Antrieb 70 ist als ein Zahnradantrieb mit einem Antriebselement 71 ausgeführt, welches in eine Antriebsführung 44 an einem Arm 40 des Getriebes 30 eingreift und den Arm 40 schwenkbar um eine erste Achse 1 in Bewegung setzt. Dabei überträgt der Arm 40 die Bewegung an ein Schaukelelement 50 des Getriebes 30 und darüber auf den Schlitten 20. Das Getriebe 30 ist erfindungsgemäß derart ausgeführt, dass der Schlitten 20 eine Schwenkbewegung S um eine zweite unbewegliche Achse 2 und eine Kippbewegung K um eine dritte bewegliche Achse 3 zwischen der Ruheposition A und der Betriebsposition B ausführen kann.

Der Arm 40 und das Schaukelelement 50 sind mittels zweier Gelenke 11, 12 drehbar entsprechend um eine erste Achse 1 und eine zweite Achse 2 an einem ersten Gehäuseteil 16a des Gehäuses 10 gelagert. Ein in den Figuren 3a und 3b nicht dargestelltes zweites Gehäuseteil 16b kann ein weiteres zweites Gelenk 12 zur schwenkbaren Lagerung des Schaukelelementes 50 aufweisen. Vorteilhafterweise kann das Getriebe 30 samt dem Arm 40 und dem Schaukelelement 50 sowie damit verbundenem Schlitten 20 zunächst am ersten Gehäuseteil 16a befestigt werden, wobei anschließend das zweite Gehäuseteil 16b lediglich als eine Abdeckung umschließend das Getriebe 30 mit den genannten Komponenten 40, 50 und 20 angebracht werden kann.

Die Figur 5 zeigt schematisch den Arm 40 und das Schaukelelement 50, die miteinander in mechanischer Wirkverbindung stehen. Der Arm 40 ist dabei drehbar um eine erste Achse 1 und das Schaukelelement 50 drehbar um eine zweite Achse 2 gelagert. Der Arm 40 wird dabei durch das Eingreifen eines Antriebselementes 71 in eine Antriebsführung 44 angetrieben. Die Antriebsführung 44 ist erfindungsgemäß bogenförmig ausgeführt, um eine Schwenkbewegung des Armes 40 zu erzeugen. Während in einer ersten Antriebsphase I, wie gezeigt in der Beschreibung der Figur 2a, verfährt das Antriebselement 71 von einem gehäuseseitigen Anschlag 44a zum getriebeseitigen Anschlag 44b der Antriebsführung 44, wobei sich der Arm 40 noch nicht bewegt. Wenn das Antriebselement 71 in einer zweiten Antriebsphase II der Figur 2b auf den getriebeseitigen Anschlag 44b drückt, kann der Arm 40 verschwenkt werden, wobei ein Lenkelement 41 des Armes 40 auf eine Lenkführung 54 des Schaukelelementes 50 einwirken kann. Je weiter das Lenkelement 41 in der Lenkführung 54 verfährt, desto größer wird der Schwenkradius, mit dem die Schwenkbewegung auf das Schaukelelement 50 übertragen wird. In der zweiten Antriebsphase II durchläuft das Lenkelement 41 einen Abschnitt der Lenkführung 54 zwischen einem unteren Anschlag 54a und einem oberen Scheitelpunkt 54s der Lenkführung 54. In einer dritten Antriebsphase III verfährt das Lenkelement 41 noch weiter in der Lenkführung 54 bis zu einem unteren Scheitelpunkt 54f und anschließend in der vierten Antriebsphase IV bis zu einem oberen Anschlag 54b der Lenkführung 54. Die Lenkführung 54 ist vorteilhafterweise derart ausgebildet, dass nicht nur das Schaukelelement 50 eine Schwenkbewegung S mit immer größer werdenden Radius ausführen kann, sondern auch der Schlitten 20, wobei der Schlitten 20 zusätzlich in der vierten Antriebsphase IV, zumindest zum Teil bedingt durch die Ausformung der Lenkführung 54 zwischen dem unteren Scheitelpunkt 54f und dem oberen Anschlag 54b der Lenkführung 54 eine Kippbewegung K ausführen kann. Der Kippradius, um den der Schlitten 20 sich verschwenken kann, kann durch einen Abstand zwischen einer dritten Achse 3 und dem Gleitelement 21 des Schlittens 20 zumindest teilweise bestimmt werden, welches Gleitelement 21 in einer in Figur 2a bis 2c dargestellten Gehäuseführung 14 ausführt.

Die Figur 6 zeigt, dass das Gehäuse 10 zumindest das erste 16a und das zweite Gehäuseteil 16b sowie einen Gehäusedeckel 15 umfasst. Das erfindungsgemäße Verfahren zur Montage der in den Figuren 1 bis 4b gezeigten Vorrichtung kann dabei vorsehen, dass in einem ersten Schritt das Getriebe 30 und der Schlitten 20 in einer ersten Montagerichtung M, wie gezeigt in Figur 6, zu einer Innenseite des ersten Gehäuseteils 16a geführt werden und an der Innenseiten des ersten Gehäuseteils 16a befestigt werden kann. Anschließend in einem zweiten Schritt kann das zweite Gehäuseteil 16b in der ersten Montagerichtung M zum ersten Gehäuseteil 16a geführt werden und mit dem ersten Gehäuseteil 16a derart befestigt werden, dass eine Schwenkbewegung S und/oder eine Kippbewegung K des Schlittens 20 zwischen der Ruheposition A und der Betriebsposition B, wie gezeigt in Figuren 2b bis 2c, ausführbar ist. Das zweite Gehäuseteil 16b kann mit einem zweiten Gelenk 12 und einer Gehäuseführung 14, symmetrisch zu dem zweiten Gelenk 12 und zur Gehäuseführung 14 des ersten Gehäuseteils 16a, ausgebildet sein. Mithin kann das Schaukelelement 50 beidseitig an beiden Gehäuseteilen 16a, 16b gelenkig aufgenommen werden, wobei der Schlitten 20 jeweils ein Gleitelement 21 an jeder Seite aufweisen kann, die an beiden Seiten des Schlittens 20 in einer jeweils komplementären Gehäuseführung 14 geführt werden können. Dabei kann der erste und der zweite Schritt sequentiell ausgeführt werden. Alternativ ist es ebenfalls denkbar, dass der erste und der zweite Schritt zumindest teilweise gleichzeitig erfolgen. Derartige Anordnung des Getriebes 30 an nur einem ersten Gehäuseteil 16a, das zunächst von allen Seiten zugänglich ist, erleichtert die Montage der Komponenten 30, 40, 50 und 20. Wobei das zweite Gehäuseteil 16b nach der abgeschlossenen Montage des Getriebes 30 lediglich auf das erste Gehäuseteil 16a aufgesetzt werden muss. Das zweite Gehäuseteil 16b kann mittels Schrauben und/oder mittels Rastelemente und/oder form- und/oder kraftschlüssig am ersten Gehäuseteil 16a befestigt werden. Anschließend in einem dritten Montageschritt oder zwischen dem ersten und dem zweiten Montageschritt kann der in Figuren 1 bis 4b gezeigte Gehäusedeckel 15 mittels Schrauben und/oder mittels Rastelemente und/oder form- und/oder kraftschlüssig an dem ersten Gehäuseteil 16a und/oder auf dem zweiten Gehäuseteil 16b befestigt werden.

Wenn im Betrieb der Vorrichtung oder der Kamera 60 eine Wartung eines der Bauteile 30, 40, 50 oder 20 oder der Kamera 60 notwendig wird, kann die Wartung durchgeführt werden ohne die Vorrichtung ganz abzumontieren. Hierzu kann auf eine einfache Weise lediglich das zweite Gehäuseteil 16b abgenommen werden, sodass ein unbeschwerter Zugriff auf die Bauteile 30, 40, 50 und 20 der Vorrichtung und/oder auf die Montageöffnung 24 des Schlittens 20 zwecks Austauschs oder Reparatur der Kamera 60 möglich ist. Außerdem ist es vorteilhaft, dass die erfindungsgemäße Vorrichtung auch ohne Kamera 60 fertig gestellt und aufgebaut werden kann, wobei es einem Fahrzeughersteller oder Benutzer überlassen werden kann, eine gewünschte Kamera in die Vorrichtung einzusetzen.

Vorteilhafterweise kann das Deckelelement 18 bei einem Unfall bzw. einem Zusammenstoß mit einem anderen Fahrzeug oder einem anderen Objekt oder einem Benutzer leicht vom Drehgelenk 19 abfallen, um den Stoß an die Vorrichtung nicht zu übertragen und um das andere Fahrzeug und das andere Objekt nicht zu beschädigen oder den Benutzer nicht zu verletzen. Erfindungsgemäß erfordert das Deckelelement 18 keinen besonderen Antrieb. Das Deckelelement 18 kann zwischen einer Öffnungsposition und einer Schließposition bzgl. der Öffnung 17 durch den Schlitten 20 gebracht werden, wobei der Schlitten 20 ein lösbares Verbindungselement 26 zum Deckelelement 18 aufweist.

Erfindungsgemäß kann ferner eine in den Figuren 2a bis 4b nicht dargestellte Schutzmembran vorgesehen sein, um den freien Raum zwischen der Öffnung 17 im Gehäuse 10 und dem Schlitten 20 abzudichten. Die Schutzmembran 9 kann vorteilhafterweise das Eindringen von Schmutzpartikeln und Feuchtigkeit in das Gehäuse 10 verhindern und die Kamera 60 vor Witterungseinflüssen schützen. Die Schutzmembran 9 kann, wie zuvor in Figur 2 gezeigt ist, als eine Balgenmembran ausgeführt sein. Die Schutzmembran 9 kann aus einem elastischen Material ausgeführt sein, wobei während der Bewegung des Schlittens 20 die Schutzmembran 9 verformt werden kann. Die Schutzmembran 9 kann in einem weiteren Montageschritt oder zwischen dem ersten und zweiten oder zwischen dem zweiten und dritten Schritt am Schlitten 20 und am Gehäusedeckel 15 angeordnet werden. Ebenfalls ist es denkbar, dass die Schutzmembran 9 vor dem ersten Montageschritt auf dem Schlitten 20 angeordnet werden kann, beispielsweise durch einen Spannring außenseitig an der Aufnahmeöffnung 25 angespannt werden kann, wobei anschließend beim Befestigen des Gehäusedeckels 15 ein zweites Ende der Schutzmembran 9 zwischen dem Gehäusedeckel 15 und/oder dem ersten Gehäuseteil 16a und/oder zweiten Gehäuseteil 16b eingeklemmt werden kann, und insbesondere am Gehäusedeckel 15 am Rand der Öffnung 17 geklebt werden kann.

Außerdem kann vorgesehen sein, dass die Öffnung 17 von außen auf dem Gehäusedeckel 15 mit einem Kragenelement aus einem elastischen Material versehen werden kann, an welchem das Deckelelement 18 abfedern kann, um Schließgeräusche zu verhindern, wenn der Schlitten 20 in die Ruheposition A zurückfährt.

Das Gehäuse 10 der Vorrichtung und/oder das Getriebe 30 und/oder der Schlitten 20 und/oder der Arm 40 und/oder das Schaukelelement 50 können beispielsweise aus Kunststoff ausgebildet sein und durch einen Formprozess wie Formgießen oder Spritzgießen hergestellt werden. Das Gehäuse 10 und das Getriebe 30, einschließlich des Armes 40 und des Schaukelelementes 50, können einem ersten Material und die Schutzmembran 9 und das Kragenelement aus einem zweiten Material hergestellt werden, wobei das erste Material einen höheren Härtegrad aufweisen kann als das zweite Material.

### Bezugszeichenliste

- 1: erste Achse
- 2: zweite Achse
- 3: dritte Achse

- 9: Schutzmembran
- 10: Gehäuse

- 11: erstes Gelenk
- 12: zweites Gelenk
- 13: drittes Gelenk

- 14: Gehäuseführung
- 14a: hinterer Anschlag der Gehäuseführung
- 14b: vorderer Anschlag der Gehäuseführung
- 15: Gehäusedeckel
- 16a: erstes Gehäuseteil
- 16b: zweites Gehäuseteil
- 17: Öffnung im Gehäuse
- 18: Deckelelement
- 19: Drehgelenk des Deckelelementes

- 20: Schlitten
- 21: Gleitelement
- 22: obere Hinterseite des Schlittens
- 23: untere Hinterseite des Schlittens
- 24: Montageöffnung
- 25: Aufnahmeöffnung
- 26: lösbares Verbindungselement des Deckelelementes 18
- 30: Getriebe

- 40: Arm
- 41: Lenkelement
- 44: Antriebsführung
- 44a: gehäuseseitiger Anschlag der Antriebsführung
- 44b: getriebeseitiger Anschlag der Antriebsführung

- 50: Schaukelelement
- 52: Schaukelarm
- 54: Lenkführung
- 54a: unterer Anschlag der Lenkführung
- 54s: oberer Scheitelpunkt der Lenkführung
- 54f: unterer Scheitelpunkt der Lenkführung
- 54b: oberer Anschlag der Lenkführung

- 60: Kamera

- 70: Antrieb
- 71: Antriebselement

- A: Ruheposition
- B: Betriebsposition
- K: Kippbewegung des Schlittens 20
- S: Schwenkbewegung des Schlittens 20

- I: erste Antriebsphase
- II: zweite Antriebsphase
- III: dritte Antriebsphase
- IV: vierte Antriebsphase

## Patentansprüche

1. Vorrichtung zur Aufnahme einer Kamera (60), die insbesondere als Einparkhilfe eines Kraftfahrzeuges dient, mit
einem Gehäuse (10), in dem ein Schlitten (20) bewegbar aufgenommen ist, an dem die Kamera (60) befestigbar ist,
wobei der Schlitten (20) durch ein Getriebe (30) antreibbar ist,
welches Getriebe (30) einen Arm (40) aufweist, der am Gehäuse (10) gelagert ist und mit einem Schaukelelement (50) in mechanischer Wirkverbindung ist, das drehbar um eine zweite Achse (2) am Gehäuse (10) gelagert ist, wobei der Schlitten (20) drehbar um eine dritte Achse (3) am Schaukelelement (50) gelagert ist,
wobei die Bewegung des Schlittens (20) zwischen einer Ruheposition (A) und einer Betriebsposition (B) zumindest teilweise durch eine Gehäuseführung (14) des Gehäuses (10) bestimmt ist, **dadurch gekennzeichnet, dass** der Arm (40) drehbar um eine erste Achse (1) am Gehäuse (10) gelagert ist.

2. Vorrichtung nach Anspruch 1,
**dadurch gekennzeichnet,**
**dass** der Schlitten (20) eine gehäuseseitige Montageöffnung (24), um eine Kamera (60) austauschbar aufzunehmen, und/oder eine nach außen zeigende Aufnahmeöffnung (27) aufweist, durch welche die Kamera (60) nach außen gerichtet ist.

3. Vorrichtung nach Anspruch 1 oder 2,
**dadurch gekennzeichnet,**
**dass** der Arm (40) mittels eines ersten Gelenks (11) am Gehäuse (10) und das Schaukelelement (50) mittels eines zweiten Gelenks (12) am Gehäuse (10) gelagert ist, wobei insbesondere die erste Achse (1) durch das erste Gelenk (11) und die zweite Achse (2) durch das zweite Gelenk (12) verläuft.

4. Vorrichtung nach einem der vorhergehenden Ansprüche,
**dadurch gekennzeichnet,**
**dass** die erste Achse (1) und die zweite Achse (2) unbeweglich am Gehäuse (10) angeordnet sind, und dass insbesondere die erste Achse (1) parallel zur zweiten Achse (2) verläuft.

5. Vorrichtung nach einem der vorhergehenden Ansprüche,
**dadurch gekennzeichnet,**
**dass** der Schlitten (20) mittels eines dritten Gelenks (13) am Schaukelelement (50) angeordnet ist, wobei insbesondere die dritte Achse (3) durch das dritte Gelenk (13) verläuft und/oder die dritte Achse (3) parallel zur ersten Achse (1) und zur zweiten Achse (2) mit dem Schaukelelement (50) bewegbar ist.

6. Vorrichtung nach einem der vorhergehenden Ansprüche,
**dadurch gekennzeichnet,**
**dass** Schlitten (20) ein Gleitelement (21) aufweist, welches entlang der Gehäuseführung (14) des Gehäuses (10) verschiebbar ist, wobei insbesondere die Gehäuseführung (14) bogenförmig ausgeformt ist.

7. Vorrichtung nach einem der vorhergehenden Ansprüche,
**dadurch gekennzeichnet,**
**dass** der Arm (40) eine Antriebsführung (44) aufweist, die mit einem Antriebselement (71) eines Antriebes (70) zusammenwirkt, um den Arm (40) um die erste Achse (1) zu verschwenken, wobei insbesondere die Antriebsführung (44) bogenförmig ausgebildet ist.

8. Vorrichtung nach einem der vorhergehenden Ansprüche,
**dadurch gekennzeichnet**,
das Schaukelelement (50) eine Lenkführung (54) aufweist, die mit einem Lenkelement (41) des Armes (40) zusammenwirkt, um das Schaukelelement (50) um die zweite Achse (2) und den Schlitten (20) um die dritte Achse (3) zu verschwenken, wobei insbesondere die Lenkführung (54) S-förmig ausgebildet ist.

9. Vorrichtung nach einem der vorhergehenden Ansprüche,
**dadurch gekennzeichnet,**
**dass** das Getriebe (30) derart ausgebildet ist, dass der Schlitten (20) zum Teil eine Schwenkbewegung (S) um die zweite Achse (2) und zum Teil eine Kippbewegung (K) um die dritte Achse (3) ausführt,
und **dass** insbesondere die Schwenkbewegung (S) aus der Ruheposition (A) in die Betriebsposition (B) mit einem veränderlichen Radius durchführbar ist, der durch die Lenkführung (54) bestimmt ist.

10. Vorrichtung nach einem der vorhergehenden Ansprüche,
**dadurch gekennzeichnet,**
**dass** das Getriebe (30) derart aufgebaut ist, dass während der Kippbewegung (K) die Schwenkbewegung (S) des Schlittens (20) um die zweite Achse (2) blockiert ist,
und **dass** insbesondere das Getriebe (30) derart aufgebaut ist, dass die Schwenkbewegung (S) und die Kippbewegung (K) zumindest teilweise gleichzeitig erfolgen.

11. Vorrichtung nach einem der vorhergehenden Ansprüche,
**dadurch gekennzeichnet,**
**dass** das Gehäuse (10) eine Öffnung (17) aufweist, durch die der Schlitten (20) in der Betriebsposition (B) hinausragt,
und **dass** insbesondere ein Deckelelement (18) vorgesehen ist, der in der Ruheposition (A) des Schlittens (20) die Öffnung (17) abschließt,
wobei insbesondere das Deckelelement (18) mittels eines Drehgelenks (19) und/oder formschlüssig und/oder kraftschlüssig, drehbar und/oder lösbar am Gehäuse (10) angeordnet ist.

12. Vorrichtung nach einem der vorhergehenden Ansprüche,
**dadurch gekennzeichnet,**
**dass** der Schlitten (20) und das Deckelelement (18) in mechanischer Wirkverbindung stehen, und dass während der Bewegung aus der Ruheposition (A) in die Betriebsposition (B) der Schlitten (20) das Deckelelement (18) in Bewegung setzt,
wobei insbesondere der Schlitten (20) mindestens einen Stößel aufweist und/oder der Schlitten (20) mit dem Deckelelement (18) form- und/oder kraftschlüssig, lösbar verbunden ist.

13. Vorrichtung nach einem der vorhergehenden Ansprüche,
**dadurch gekennzeichnet,**
**dass** eine Schutzmembran (9) vorgesehen ist, die den freien Raum zwischen der Öffnung (17) im Gehäuse (10) und dem Schlitten (20) abdichtend abschließt, um das Eindringen von Schmutzpartikeln und Feuchtigkeit in das Gehäuse (10) zu verhindern und/oder dass die Öffnung (17) ein Kragenelement aufweist, an welchem das Deckelelement (18) anliegt, wenn der Schlitten (20) sich in der Ruheposition (A) befindet,
wobei insbesondere das Kragenelement aus einem elastischen Material ausgebildet ist.

14. Verfahren zur Montage einer Vorrichtung, insbesondere gemäß einem der vorhergehenden Ansprüche, zur Aufnahme einer Kamera (40), die insbesondere als Einparkhilfe eines Kraftfahrzeuges dient, mit
einem Gehäuse (10), in dem ein Schlitten (20) bewegbar aufgenommen ist, an dem die Kamera (40) befestigbar ist,
wobei das Gehäuse (10) zumindest ein erstes (16a) und ein zweites Gehäuseteil (16b) umfasst,
wobei der Schlitten (20) durch ein Getriebe (30) antreibbar ist,
welches Getriebe (30) einen Arm (40) aufweist, der drehbar um eine erste Achse (1) am Gehäuse (10) gelagert ist, und mit einem Schaukelelement (50) in mechanischer Wirkverbindung ist, das drehbar um eine zweite Achse (2) am Gehäuse (10) gelagert ist, wobei der Schlitten (20) drehbar um eine dritte Achse (3) am Schaukelelement (50) gelagert ist,
wobei die Bewegung des Schlittens (20) zwischen einer Ruheposition (A) und einer Betriebsposition (B) zumindest teilweise durch eine Gehäuseführung (14) des Gehäuses (10) bestimmt ist,
wobei die Montage folgende Schritte aufweist:
in einem ersten Schritt das Getriebe (30) und der Schlitten (20) in einer ersten Montagerichtung (M) zu einer Innenseite des ersten Gehäuseteils (16a) geführt werden und an der Innenseiten des ersten Gehäuseteils (16a) befestigt werden,
in einem zweiten Schritt das zweite Gehäuseteil (16b) in der ersten Montagerichtung (M) zum ersten Gehäuseteil (16a) geführt wird und mit dem ersten Gehäuseteil (16a) derart befestigt wird, dass eine Schwenk- und/oder eine Kippbewegung des Schlittens (20) zwischen der Ruheposition (A) und der Betriebsposition (B) ausführbar ist.

15. Verfahren nach Anspruch 14,
**dadurch gekennzeichnet,**
**dass** der erste und der zweite Schritt sequentiell ausgeführt werden, insbesondere dass der erste und der zweite Schritt zumindest teilweise gleichzeitig erfolgen und/oder dass in einem dritten Schritt ein Gehäusedeckel (15) am ersten (16a) und/oder am zweiten Gehäuseteil (16b) befestigt wird.

16. Verfahren nach einem der Ansprüche 14 bis 15,
**dadurch gekennzeichnet,**
**dass** eine Schutzmembran (9) am Schlitten (20) angeordnet wird, wobei die Schutzmembran (9) zwischen dem Gehäusedeckel (15) und zumindest einem der beiden Gehäuseteilen (16a, 16b) befestigt wird.

## Claims

1. Device for holding a camera (60), which particularly serves as a parking assistance for a vehicle, with a housing (10) in which a slide (20) is movably accepted, at which the camera (60) can be assembled, wherein the slide (20) can be driven by a gear (30) which gear (30) comprises an arm (40) which is mounted at the housing (10) and is in a mechanical operative connection with a rocking element (50) which is pivotably mounted at the housing (10) about a second axis (2) wherein the slide (20) is pivotably mounted at the rocking element (50) about a third axis (3), wherein the movement of the slide (20) between a rest position (A) and an operating position (B) is at least partially determined by a housing guidance (14) of the housing (10) **characterized in that** the arm (40) is pivotably mounted at the housing (10) about a first axis (1).

2. Device according to claim 1 **characterized in that** the slide (20) comprises a mounting opening (24) at the housing side in order to replacably accept a camera (60) and/or comprises an acceptance opening (27) extending towards the outside through which the camera (60) is directed to the outside.

3. Device according to claim 1 or 2 **characterized in that** the arm (40) is mounted at the housing (10) via a first joint (11) and the rocking element (50) is mounted at the housing (10) via a second joint (12) wherein particularly the first axis (1) proceeds through the first joint (11) and the second axis (2) proceeds through the second joint (12).

4. Device according to one of the preceding claims **characterized in that** the first axis (1) and the second axis (2) are immovably arranged at the housing (10) and that particularly the first axis (1) proceeds parallel to the second axis (2).

5. Device according to one of the preceding claims **characterized in that** the slide (20) is arranged at the rocking element (50) via a third joint (13) wherein particularly the third axis (3) proceeds through the third joint (13) and/or the third axis (3) is parallelly movable to the first axis (1) and to the second axis (2) with the rocking element (50).

6. Device according to one of the preceding claims **characterized in that** the slide (20) comprises a sliding element (21) which is displacable along the housing guidance (14) of the housing (10) wherein particularly the housing guidance (14) is shaped arch-like.

7. Device according to one of the preceding claims **characterized in that** the arm (40) comprises a driving guidance (44) which interacts with a driving element (71) of a drive (70) in order to move the arm (40) about the first axis (1) wherein particularly the drive guidance (44) is shaped arch-like.

8. Device according to one of the preceding claims **characterized in that** the rocking element (50) comprises a steering guidance (54) which interacts with a steering element (41) of the arm (40) in order to move the rocking element (50) about the second axis (2) and the slide (20) about the third axis (3) wherein particularly the steering guidance (54) is configured S-like.

9. Device according to one of the preceding claims **characterized in that** the gear (30) is configured in a way that the slide (20) partly performs a swinging movement about the second axis (2) and partly performs a tilting movement (K) about the third axis (3) and that particularly the swinging movement (S) is performable from the resting position (A) into the operating position (B) with an alterable radius which is determined by the steering guidance (54).

10. Device according to one of the preceding claims **characterized in that** the gear (30) is configured in a way that during the tilting movement (K) the swinging movement (S) of the slide (20) about the second axis (2) is blocked and that particularly the gear (30) is configured in a way that the swinging movement (S) and the tilting movement (K) at least partially occur at the same time.

11. Device according to one of the preceding claims **characterized in that** the housing (10) comprises an opening (17) through which the slide (20) extends in the operating position (B) and that particularly a lid element (18) is intended that closes the opening (17) in the rest position (A) of the slide (20) wherein particularly the lid element (18) is formfittingly and/or forcefittingly pivotably and/or detachably and/or via a swivel joint (19) arranged at the housing (10).

12. Device according to one of the preceding claims **characterized in that** the slide (20) and the lid element (18) are in mechanical operative connection and that during the movement from the rest position into the operating position the slide (20) actuates the lid element (18) wherein particularly the slide (20) comprises at least a pestle and/or the slide (20) is form- and/or forcefittingly, detachably connected to the lid element (18).

13. Device according to one of the preceding claims **characterized in that** a protecting membrane (9) is intended which sealingly closes the free space between the opening (17) in the housing (10) and the slide (20) in order to avoid the penetration of dirt particles or moisture into the housing (10) and/or that the opening (17) comprises a collar element at which the lid element (18) rests, when the slide (20) is in the rest position (A) wherein particularly the collar element is configured from an elastic material.

14. Method for mounting a device particularly according to one of the preceding claims for the acceptance of a camera (60) which particularly serves as a parking assistance of a vehicle, with a housing (10) in which a slide is movably accepted at which the camera can be assembled wherein the housing (10) comprises at least a first (16a) and a second housing part (16b), wherein the slide (20) can be driven by a gear (30), which gear (30) comprises an arm (40) which is pivotably mounted about a first axis (1) at the housing (10) and which is in mechanic operative connection with a a rocking element (50) which is pivotably mounted about the second axis (2) at the housing (10) wherein the slide (20) is pivotably mounted at the rocking element (50) about a third axis (3) wherein the movement of the slide (10) between a rest position (A) and an operative position (B) is at least partially determined by a housing guidance (14) of the housing (10), wherein the mounting comprises the following steps:
in a first step the gear (30) and the slide (20) are guided in a first mounting direction (M) towards the inner side of the first housing part (16a) and are arranged at the inner side of the first housing part (16a)
in a second step the second housing part (16b) is guided in a first mounting direction (M) towards the first housing part (16a) and are arranged with a first housing part (16a) such that a swinging and/or tilting movement of the slide (20) is performable between the rest position (A) and the operating position (B).

15. Method according to claim 14 **characterized in that** the first and the second step are performed sequencially, particularly that the first and the second step at least partically occur at the same time and/or that in a third step a housing lid (15) is mounted at the first (16a) and/or the second housing part (16b).

16. Method according to one of the claims 14 to 15 **characterized in that** a protecting membrane (9) is arranged at the slide (20) wherein the protecting membrane (9) is arranged between the housing lid (15) and at least one of both housing parts (16a, 16b).

## Revendications

1. Dispositif destiné à recevoir une caméra (60) qui sert notamment d'aide au stationnement d'un véhicule automobile,
avec un boîtier (10) dans lequel est reçu à déplacement un chariot (20) sur lequel peut être fixée la caméra (60),
sachant que le chariot (20) peut être entraîné par un mécanisme de transmission (30),
le mécanisme de transmission (30) présentant un bras (40), qui est monté sur le boîtier (10) et qui se trouve en liaison fonctionnelle mécanique avec un élément formant bascule (50) qui est monté sur le boîtier (10) à rotation autour d'un deuxième axe (2), sachant que le chariot (20) est monté sur l'élément formant bascule (50) à rotation autour d'un troisième axe (3),
sachant que le mouvement du chariot (20) entre une position de repos (A) et une position de travail (B) est au moins partiellement déterminé par un élément de guidage (14) du boîtier (10),
**caractérisé en ce que** le bras (40) est monté sur le boîtier (10) à rotation autour d'un premier axe (1).

2. Dispositif selon la revendication 1, **caractérisé en ce que** le chariot (20) présente une ouverture de montage (24) côté boîtier, afin de recevoir une caméra (60) avec possibilité de remplacement, et/ou une ouverture réceptrice (27) dirigée vers l'extérieur, à travers laquelle la caméra (60) est orientée vers l'extérieur.

3. Dispositif selon la revendication 1 ou 2, **caractérisé en ce que** le bras (40) est monté sur le boîtier (10) au moyen d'une première articulation (11) et l'élément formant bascule (50) est monté sur le boîtier (10) au moyen d'une deuxième articulation (12), sachant notamment que le premier axe (1) passe par la première articulation (11) et le deuxième axe (2) par la deuxième articulation (12).

4. Dispositif selon l'une des revendications précédentes, **caractérisé en ce que** le premier axe (1) et le deuxième axe (2) sont disposés de manière immobile sur le boîtier (10), et **en ce que** le premier axe (1) s'étend notamment parallèlement au deuxième axe (2).

5. Dispositif selon l'une des revendications précédentes, **caractérisé en ce que** le chariot (20) est disposé au moyen d'une troisième articulation (13) sur l'élément formant bascule (50), sachant notamment que le troisième axe (3) passe par la troisième articulation (13) et/ou que le troisième axe (3) peut être déplacé avec l'élément formant bascule (50) parallèlement au premier axe (1) et au deuxième axe (2).

6. Dispositif selon l'une des revendications précédentes, **caractérisé en ce que** le chariot (20) présente un élément coulissant (21) qui peut coulisser le long de l'élément de guidage (14) du boîtier (10), sachant notamment que l'élément de guidage (14) est réalisé de forme arquée.

7. Dispositif selon l'une des revendications précédentes, **caractérisé en ce que** le bras (40) présente un guide d'entraînement (44) qui coopère avec un élément d'entraînement (71) d'un entraînement (70) afin de faire pivoter le bras (40) autour du premier axe (1), sachant notamment que le guide d'entraînement (44) est réalisé de forme arquée.

8. Dispositif selon l'une des revendications précédentes, **caractérisé en ce que** l'élément formant bascule (50) présente un guide directeur (54) qui coopère avec un élément directeur (41) du bras (40) afin de faire pivoter l'élément formant bascule (50) autour du deuxième axe (2) et le chariot (20) autour du troisième axe (3), sachant notamment que le guide directeur (54) est réalisé en forme de S.

9. Dispositif selon l'une des revendications précédentes, **caractérisé en ce que** le mécanisme de transmission (30) est configuré de telle sorte que le chariot (20) exécute pour partie un mouvement de pivotement (S) autour du deuxième axe (2) et pour partie un mouvement de basculement (K) autour du troisième axe (3),
et **en ce que**, notamment, le mouvement de pivotement (S) de la position de repos (A) dans la position de travail (B) peut être effectué avec un rayon variable qui est déterminé par le guide directeur (54).

10. Dispositif selon l'une des revendications précédentes, **caractérisé en ce que** le mécanisme de transmission (30) est construit de telle sorte que le mouvement de pivotement (S) du chariot (20) autour du deuxième axe (2) est bloqué pendant le mouvement de basculement (K),
et **en ce que**, notamment, le mécanisme de transmission (30) est construit de telle sorte que le mouvement de pivotement (S) et le mouvement de basculement (K) ont lieu au moins partiellement en même temps.

11. Dispositif selon l'une des revendications précédentes, **caractérisé en ce que** le boîtier (10) présente une ouverture (17) à travers laquelle le chariot (20) fait saillie dans la position de travail (B),
et **en ce que**, notamment, il est prévu un élément formant couvercle (18) qui ferme l'ouverture (17) dans la position de repos (A) du chariot (20),
sachant notamment que l'élément formant couvercle (18) est disposé sur le boîtier (10) à rotation et/ou de manière amovible au moyen d'une articulation tournante (19) et/ou par engagement positif et/ou à force.

12. Dispositif selon l'une des revendications précédentes, **caractérisé en ce que** le chariot (20) et l'élément formant couvercle (18) se trouvent en liaison fonctionnelle mécanique, et **en ce que** le chariot (20) met en mouvement l'élément formant couvercle (18) pendant le mouvement de la position de repos (A) dans la position de travail (B),
sachant notamment que le chariot (20) présente au moins un poussoir et/ou que le chariot (20) est relié de manière amovible à l'élément formant couvercle (18) par engagement positif et/ou à force.

13. Dispositif selon l'une des revendications précédentes, **caractérisé en ce qu'**il est prévu une membrane protectrice (9) qui ferme de manière étanche l'espace libre entre l'ouverture (17) dans le boîtier (10) et le chariot (20) afin d'empêcher la pénétration de particules de saleté et d'humidité dans le boîtier (10),
et/ou **en ce que** l'ouverture (17) présente un élément formant collet contre lequel s'applique l'élément formant couvercle (18) lorsque le chariot (20) se trouve dans la position de repos (A), sachant notamment que l'élément formant collet est réalisé en un matériau élastique.

14. Procédé de montage d'un dispositif, en particulier selon l'une des revendications précédentes, destiné à recevoir une caméra (60) qui sert notamment d'aide au stationnement d'un véhicule automobile,
avec un boîtier (10) dans lequel est reçu à déplacement un chariot (20) sur lequel peut être fixée la caméra (60),
sachant que le boîtier (10) comprend au moins une première partie de boîtier (16a) et une deuxième partie de boîtier (16b),
sachant que le chariot (20) peut être entraîné par un mécanisme de transmission (30),
le mécanisme de transmission (30) présentant un bras (40), qui est monté sur le boîtier (10) à rotation autour d'un premier axe (1) et qui se trouve en liaison fonctionnelle mécanique avec un élément formant bascule (50) qui est monté sur le boîtier (10) à rotation autour d'un deuxième axe (2),
sachant que le chariot (20) est monté sur l'élément formant bascule (50) à rotation autour d'un troisième axe (3),
sachant que le mouvement du chariot (20) entre une position de repos (A) et une position de travail (B) est au moins partiellement déterminé par un élément de guidage (14) du boîtier (10),
sachant que le montage comporte les étapes suivantes :
au cours d'une première étape, le mécanisme de transmission (30) et le chariot (20) sont dirigés dans une première direction de montage (M) vers un côté intérieur de la première partie de boîtier (16a), et sont fixés sur le côté intérieur de la première partie de boîtier (16a),
au cours d'une deuxième étape, la deuxième partie de boîtier (16b) est dirigée dans la première direction de montage (M) vers la première partie de boîtier (16a), et elle est fixée à la première partie de boîtier (16a) de telle sorte qu'un mouvement de pivotement et/ou de basculement du chariot (20) entre la position de repos (A) et la position de travail (B) peut être effectué.

15. Procédé selon la revendication 14, **caractérisé en ce que** la première et la deuxième étape sont réalisées séquentiellement, en particulier **en ce que** la première et la deuxième étape ont lieu au moins partiellement en même temps, et/ou **en ce que**, au cours d'une troisième étape, un couvercle de boîtier (15) est fixé sur la première partie de boîtier (16a) et/ou sur la deuxième partie de boîtier (16b).

16. Procédé selon la revendication 14 ou 15, **caractérisé en ce qu'**une membrane protectrice (9) est disposée sur le chariot (20), sachant que la membrane protectrice (9) est fixée entre le couvercle de boîtier (15) et au moins une des deux parties de boîtier (16a, 16b).
